# EUROPEAN PATENT APPLICATION

(11) **EP 2 160 031 A1**
(43) Date of publication of application: **03.03.2010**
(21) Application number: 08757611.2
(22) Date of filing: 05.06.2008
(51) Int. Cl.: H04N 7/173

(54) **A PROGRAM NETWORK RECORDING METHOD, A MEDIA PROCESSING SERVER AND A NETWORK RECORDING SYSTEM**

(30) Priority: 08.06.2007 CN 200710110903
(71) Applicant: Huawei Technologies Co., Ltd., Longgang District, Shenzhen Guangdong 518129 (CN)
(72) Inventor: HUANG, Hui, Shenzhen Guangdong 518129 (CN); LI, Yi, Shenzhen Guangdong 518129 (CN)
(74) Representative: Charles, Glyndwr
(86) International application number: PCT/CN2008/071200
(87) International publication number: WO 2008/151550

(57) **Abstract**

A video/audio program network recording method includes: setting up a session control channel and a media transport channel with a user terminal; and receiving media data collected in real time by the user terminal and controlling recording of the data. Accordingly, a media processing server and a network recording system are disclosed. With the present invention, because media data is uploaded in real time, a large storage space is no longer required in the user terminal so that the method is also applicable to such terminals as handsets and set top boxes that have small storage spaces. Moreover, because both a control channel and a data channel are set up, the user terminal is able to control recording operations of the server via the control channel so that the user obtains an experience similar to processing a local media file.

## Description

### Field of the Invention

The present invention relates to communication technologies, and in particular, to a video/audio program network recording method, a media processing server, and a network recording system.

### Background of the Invention

As video/audio technologies and broadband network technologies are in continuous progress, video/audio sharing is developing rapidly. Generally, video/audio sharing is operated in this mode: processed video/audio programs are uploaded to a network server, which will audit and publish the programs. For example, in a popular video/audio sharing application, individual users publish video or audio programs made by themselves in the Internet for authorized users to view via the Internet.

In existing video/audio sharing applications, programs are recorded at a user terminal where a terminal device compresses and encodes signals collected by a video/audio head end and saves the signals in a particular format. After a program is completed, the user terminal transfers the video/audio program to a network server in the form of a data file.

The inventor, however, finds the program recording method in the above video/audio sharing applications has the following defect: because a video/audio file normally takes up a large storage space, when programs are recorded at the user terminal before uploaded to a website, a large local storage space must be provided at the user terminal. As a result, the range of optional terminals is limited and further, the scope of application is limited. It is inconvenient to apply the method to terminals that have a small storage space, like handsets and set top boxes.

### Summary of the Invention

Embodiments of the present invention provide a program network recording method, a media processing server and a network recording system to reduce requirements imposed on a user terminal device for program network recording.

The following technical solution is adopted:
A program network recording method includes: setting up a session control channel and a media transport channel with a user terminal; receiving media control information from the user terminal via the session control channel; receiving media data collected and transmitted in real time by the user terminal via the media transport channel; and executing a recording operation on the media data according to the media control information.
A media processing server includes: a session control unit and a media data processing unit.

The session control unit is adapted to: set up a session control channel with a user terminal, receive media control information from the user terminal via the session control channel and obtain a recording operation instruction from the media control information.

The media data processing unit is adapted to: set up a media transport channel with the user terminal, receive media data collected and transmitted in real time by the user terminal via the media transport channel, and execute a recording operation on the media data according to the recording operation instruction.

A network recording system includes: a media processing server and an application server.

The media processing server is adapted to: set up a session control channel and a media transport channel with a user terminal; receive media control information from the user terminal and forward the information to the application server; receive a recording command returned by the application server; and execute a recording operation on the media data according to the recording command.

The application server is adapted to: receive the media control information from the media processing server; resolve the media control information to obtain the recording command; and send the recording command to the media processing server.

A network recording system includes: a media processing server and an application server.

The media processing server is adapted to: receive a session setup request from a user terminal and forward the request to the application server, where the session setup request carries media communication parameters of the user terminal; receive a response returned by the application server to the session setup request, where the response to the session setup request carries a recording navigation menu or a storage address of the recording navigation menu which includes instructions of keys mapped to the media control information; return a session setup success message to the user terminal in response to the session setup request after determining that the server has enough resource capabilities, where the session setup success message carries media communication parameters of the server; set up a media transport channel with the user terminal according to the media communication parameters of the user terminal; deliver the recording navigation menu to the user terminal via the media transport channel and receive media data collected and transmitted in real time by the user terminal; receive media control information from the user terminal and forward the information to the application server; receive a recording command from the application server; and execute a recording operation on the media data according to the recording command.

The application server is adapted to: receive the session setup request of the user terminal forwarded by the media processing server and return the response to the session setup request; receive the media control information from the media processing server; resolve the media control information to obtain the recording command; and send the recording command to the media processing server.

In the embodiments of the present invention, a session control channel and a media transport channel are set up between a user terminal and a server so as to receive media data collected by the user terminal in real time and to control recording of the media data. Because media data is uploaded in real time, a large storage space is no longer required in the user terminal so that the method is also applicable to such terminals as handsets and set top boxes that have small storage spaces. Moreover, because both a control channel and a data channel are set up, the user terminal is able to control recording operations of the server via the control channel so that the user obtains an experience similar to processing a local media file.

### Brief Description of the Drawings

FIG. 1 is a flowchart of a video/audio program network recording method in a first embodiment of the present invention;
FIG. 2 is a schematic drawing illustrating a transport channel in an All-IP domain in the first embodiment of the present invention;
FIG. 3 is a schematic drawing illustrating a transport channel spanning a circuit switched domain and an IP domain in the first embodiment of the present invention;
FIG. 4 is a flowchart of a video/audio program network recording method in a second embodiment of the present invention;
FIG. 5 shows a session setup signaling flowchart in the second embodiment of the present invention;
FIG. 6 shows a recording interaction signaling flowchart in the second embodiment of the present invention;
FIG. 7 is a schematic drawing of the logical structure of a media processing server in a third embodiment of the present invention;
FIG. 8 is a schematic drawing of the logical structure of a media processing server in a fourth embodiment of the present invention;
FIG. 9 is a schematic drawing of the logical structure of a network recording system in a fifth embodiment of the present invention; and
FIG. 10 is a schematic drawing of the logical structure of a network recording system in a sixth embodiment of the present invention.

### Detailed Description of the Invention

A video/audio program network recording method is provided according to embodiments of the present invention, where a session control channel and a media transport channel are set up with a user terminal to receive media data collected in real time by the user terminal and to control recording of the data. Accordingly, a media processing server and a network recording system are provided according to the embodiments of the present invention. The embodiments are described hereinafter in detail.

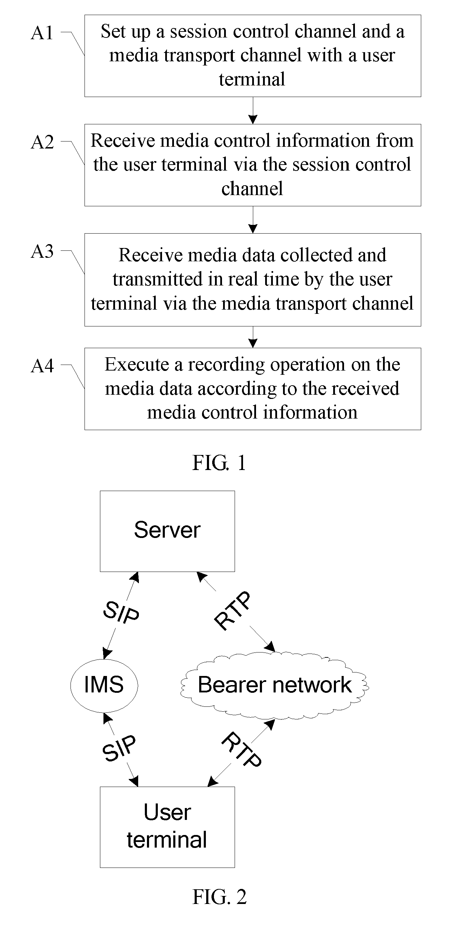

In the first embodiment of the present invention, a video/audio program network recording method, as shown in FIG. 1, includes the following:

### A1. Set up a session control channel and a media transport channel with a user terminal.

In this embodiment, a session control channel and a media transport channel are set up between a user terminal and a server for separate transfer of control information and media data. The session control protocol for setting up the session control channel is required to support bidirectional communications of the user terminal and the server. For the specific process of setting up the session control channel and the media transport channel, refer to the session setup process in existing video communications. Normally, the session control channel is set up before the media transport channel. The process includes the following steps:

### (1) Set up a session control channel with the user terminal and negotiate media communication parameters.

A session control channel is set up first, so that media communication parameters can be negotiated between the user terminal and server to help set up a media transport channel. In addition, such security control operations as authentication can be performed for the user, and according to the authentication result, whether to proceed to set up the media transport channel can be decided.

It should be noted that, if the chosen session control protocol supports Quality of Service (QoS) policy negotiation with network devices and the device deployed in the network has the capability, when the session control channel is set up with the user terminal, a resource control device in the network can be triggered to reserve resources, such as network bandwidth, for a media transport channel of the session. This assures the QoS of the media transport channel established later and overcomes the QoS issue induced by an instable network environment when media data is transferred. The reliability of media data transfer is therefore improved. The specific steps of QoS policy negotiation comply with the chosen session control protocol and are not specially specified in this embodiment.

### (2) Set up a media transport channel with the user terminal according to the negotiated media communication parameters.

The media transport protocol for setting up the media transport channel is required to support the real-time transport of video/audio media streams. For example, the Real-time Transport Protocol (RTP) may be adopted. RTP can reduce jitters caused by delay and therefore can improve the quality of real-time transport of media data.

### A2. Receive media control information from the user terminal via the established session control channel.

The control information transported over the session control channel includes session control information and media control information.

The session control information means control of a session process, such as the resource capability negotiation, setup and teardown of the session. Transport of the session control information complies with the chosen session control protocol and is not specially specified in this embodiment.

The media control information is interactive control information related to the recording process, such as Start, Pause, Stop, Playback, Save and Remove, which may be transmitted by carrying an appropriate command script in a particular message defined in the chosen session control protocol.

A user may know the association between media control information and terminal input by different means. In the case of a handset user, it is the association between media control information and keys. Specifically, an offline method may be used to know the association. For example, the user may know the association through a user manual of the service or terminal. Optionally, an online method may be used. For example, the server delivers an instruction to the user terminal via the media transport channel after the session is set up.

### A3. Receive media data collected and transmitted in real time by the user terminal via the established media transport channel.

In this step, operations at the user terminal are like the operations in a video call. Specifically, media data collected by a video/audio head end in real time is compressed and encoded in a given format and transmitted to the server along the established media transport channel.

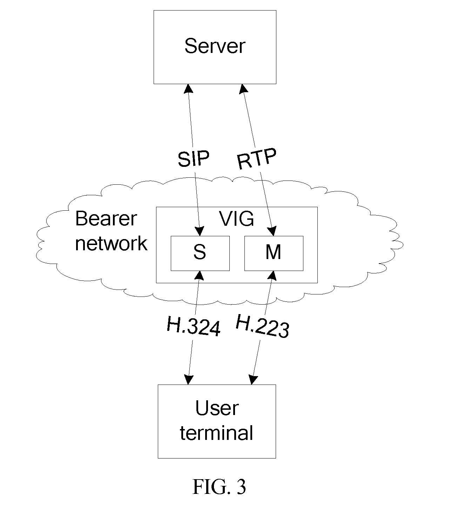

The session control channel and the media transport channel established and used in steps A1 to A3 may be in an All Internet Protocol (All-IP) domain, or partially in a circuit switched domain. In the latter scenario, a Video Interworking Gateway (VIG) is required to fulfill conversion between the circuit switched domain and the IP domain. The two scenarios are detailed below:
In the first scenario, as shown in FIG. 2, both the user terminal and the server are located in the IP domain, which means communications over an All-IP bearer network. In this case, the session control channel is set up (in compliance with the Session Initiation Protocol (SIP) as assumed in FIG. 2) at the control layer of the bearer network, namely, at the IP Multimedia Subsystem (IMS), between the user terminal and the server, and the media transport channel is set up (in compliance with RTP as assumed in FIG. 2) in the bearer network.
In the second scenario, as shown in FIG. 3, the user terminal is located in the circuit switched domain and the server is located in the IP domain. In this case, a VIG need be deployed in the bearer network so that the session control channel and the media transport channel between the user terminal and the server can be set up via the VIG. The control information and media data exchanged between the user terminal and the server need be converted by the VIG. In FIG. 3, for example, in the session control channel, a signaling converting function S in the VIG converts an H.234 message in the circuit switched domain at the user end into a SIP message at the server end; in the media transport channel, a media converting function M in the VIG converts an H.223 media stream in the circuit switched domain at the user end into an RTP stream at the server end. Accordingly, control information and media streams from the server to the user terminal are converted in a reverse manner.

### A4. Execute a recording operation on the media data according to the received media control information.

The server resolves the media control information, such as Start, Stop, Playback, Save, and Remove, received from the session control channel to know the recording operation instructed by the user and records the media data received from the media transport channel according to the instruction. The association between media control information and recording operations may be as follows:
(1) The recording operation in association with the Start control information is to save the received media data in a temporary storage area.
(2) The recording operation in association with the Stop control information is to stop saving received media data in the temporary storage area.
(3) The recording operation in association with the Playback control information is to read the saved media data and deliver the media data to the user terminal via the media transport channel.
(4) The recording operation in association with the Save control information is to move the media data saved in the temporary storage area to a permanent storage area (in practice, when the media data is saved permanently, the coding format of a media file may be changed or not be changed).
(5) The recording operation in association with the Remove control information is to delete the media data saved in the temporary storage area from the temporary storage area.

In view of the idea in general service implementation that the service logic and data operation are executed by different logical entities, in this embodiment, a relatively independent application server may be deployed to resolve the media control information. The server that interacts with the user terminal and executes the recording operation is referred to hereinafter as a media processing server, which may be a standalone hardware device, or a function in the media server that provides services related to video/audio recording. In this case, the step of executing a recording operation on the media data according to the media control information may include:
(1) The media processing server sends the media control information from the user terminal to an application server.
(2) The media processing server receives a recording command returned by the application server. The command is obtained by the application server by resolving the media control information.
(3) The media processing server executes an appropriate recording operation on the media data from the user terminal according to the recording command.

In addition, it is easy to understand that a charging related communication process may be added to the method in this embodiment in view of the usual service design. Normally, the media processing server at the server end triggers the charging operation of a charging platform at proper time. The start time, policy and mode of charging are not limited by the embodiment of the present invention. Charging may be started upon session setup, or upon reception of the recording start control information from the user terminal. Furthermore, if the recording finally fails (for example, the transport of media data fails for network reasons or a media file cannot be normally saved for server reasons), charging may be cancelled.

In this embodiment, a session control channel and a media transport channel are set up between a user terminal and a server so as to receive media data collected by the user terminal in real time and to control recording of the media data. Because media data is uploaded in real time, a large storage space is no longer required in the user terminal so that the method is also applicable to such terminals as handsets and set top boxes that have small storage spaces. Moreover, because both a control channel and a data channel are set up, the user terminal is able to control recording operations of the server via the control channel so that the user obtains an experience similar to processing a local media file.

Among session control protocols that meet the requirement of the first embodiment, SIP is a typical instance. The following gives a SIP-based process of the method provided in the first embodiment.

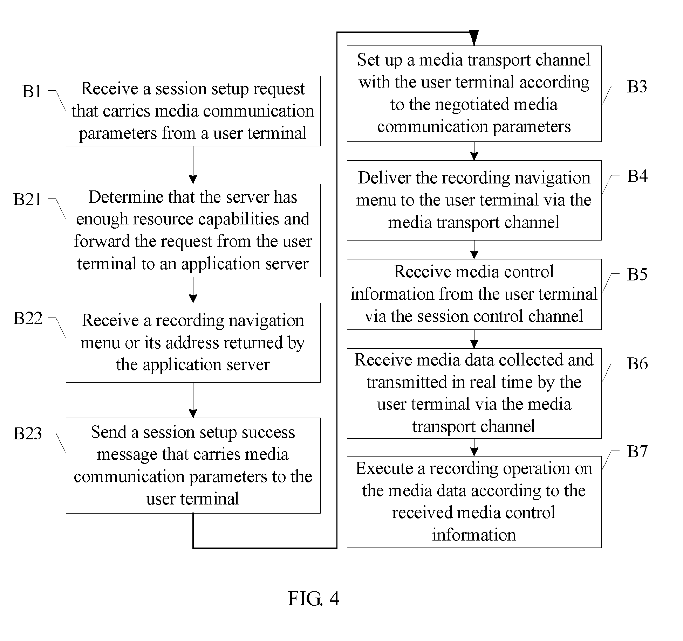

In the second embodiment of the present invention, a video/audio program network recording method, as shown in FIG. 4, includes the following:
B 1. Receive a session setup request (INVITE) from the user terminal, where the session setup request carries media communication parameters of the user terminal.
B2. Determine that the server has enough resource capabilities and return a session setup success message to the user terminal, where the session setup success message carries media communication parameters of the server.

In steps B1 and B2, a session control channel is set up and media communication parameters, such as the coding scheme, are negotiated. In this embodiment, if the server structure includes an application server and a media processing server, the media processing server forwards the user request to the application server, which will perform authentication and instruct the media processing server to return a response.

Further, in this embodiment, the user is informed of the association between media control information and terminal input via an online method. The server informs the user of keys in association with media control information by delivering a recording navigation menu. In this case, step B2 includes the following:
B21. After the media processing server determines that the server has enough resource capabilities (for example, the server has an enough local storage space), the media processing server forwards the user request to the application server. The media processing server may perform necessary format or protocol conversion for the user request according to the interface with the application server.
B22. The media processing server receives the response returned by the application server. The response carries a recording navigation menu or a storage address of the recording navigation menu.
B23. Upon reception of the response from the application server, the media processing server sends a session setup success message to the user terminal.
B3. The media processing server sets up a media transport channel with the user terminal according to the negotiated media communication parameters.
B4. The media processing server delivers the recording navigation menu to the user terminal via the media transport channel.

The recording navigation menu may be displayed on the screen of the user terminal in the form of dynamic video. The user can execute recording operations by pressing appropriate keys on the terminal according to instructions of the recording navigation menu.
B5. The media processing server receives media control information from the user terminal via the session control channel.
B6. The media processing server receives media data collected and transmitted in real time by the user terminal via the media transport channel.
B7. The media processing server executes a recording operation on the media data according to the received media control information.

Steps B5-B7 are equivalent to steps A4-A5 in the first embodiment.

In particular, because SIP supports QoS policy negotiation, if supported by network devices, the server can trigger a QoS policy negotiation process of resource control devices in the network upon reception of an INVITE call from the user terminal so as to reserve network bandwidth for the media transport channel. Taking IMS as an example, a QoS management process in the case of SIP is described in brief.

Resource control devices in an IMS include a Policy Decision Function (PDF) entity and a Policy Enforcement Function (PEF) entity. A General Packet Radio Service Support Node (GSN) with a Policy Enforcement Point (PEP) usually acts as a Policy Enforcement Function. The process in which a resource control device reserves resources for the media transport channel of the session includes:
(1) A Call Session Control Function (CSCF) participating in the setup of the session control channel in the network registers the session with the PDF (usually the CSCF triggers registration with the PDF upon reception of a SIP 183 provisional response from the server to the INVITE call of the user terminal), obtains a Token from the PDF and delivers the Token to the user terminal.
(2) The user terminal sends a resource request to the GSN with the Token. The resource request carries context information such as the bit rate, coding scheme and communication port number.
(3) The GSN forwards the request that carries the Token to the PDF entity.
(4) The PDF entity validates the Token and maps the obtained application layer parameters to IP QoS parameters, and allocates necessary network resources for the media stream of the session according to a resource allocation policy, and delivers the QoS parameters to the GSN.
(5) The PEP in the GSN enforces the appropriate resource allocation policy according to the QoS parameters, for example, allocating bandwidth resources that guarantee the QoS.

In this embodiment, a SIP-based session setup process is adopted. If supported by network devices, QoS policy management can be implemented so that an end-to-end communication channel with guaranteed bandwidth is set up to assure the QoS of real-time transport of the recorded program stream. In addition, because the recording navigation menu is delivered over a media stream, lower capabilities are required on the terminal. Compared with a browser-based solution, a terminal only needs to have the video communication capability, without the capability of intelligent browser resolution. For example, a common video phone and a camera-enabled 3rd Generation (3G) handset can serve the purpose well. Furthermore, because the recording navigation menu is displayed dynamically in a media stream, the display effect is better and the user experience is enhanced.

For better understanding of the foregoing embodiment, two signaling processes respectively for session control and recording interaction based on SIP are described in the second embodiment of the present invention. It is assumed that the server end includes a media processing server and an application server.

### I. Session control process

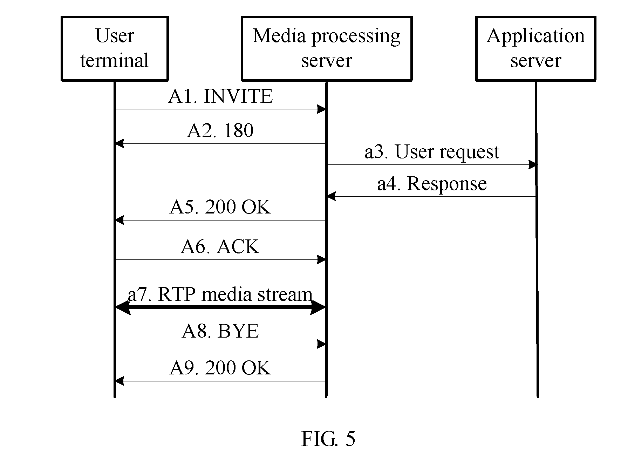

As shown in FIG. 5, the process includes:
a1. The user terminal originates an INVITE call to a video recording service indicated by a SIP Uniform Resource Locator (URL) of a media processing server, with the message carrying such media information as the coding scheme of the user terminal.
a2. The media processing server receives the SIP call request and after determining that the server has enough storage and session resource capabilities, sends a 180 provisional response to the user terminal.
a3. The media processing server forwards the user request to an application server in the form of an HTTP GET message.
a4. The application server returns a response which indicates the media file of the recording navigation menu or its storage path.
a5. The media processing server sends a 200 OK message which carries session parameters of the chosen coding scheme to the user terminal.
a6. The user terminal returns an ACK message.
a7. An RTP media channel is set up between the user terminal and the media processing server, with media channel parameters based on the negotiation result of the SIP session (usually carried in a Session Description Protocol (SDP) message body of a SIP message). After the channel is set up, the recording navigation menu is delivered to the user terminal along the downlink channel (from the media processing server to the user terminal). The video/audio signal collected and compressed by the user terminal is uploaded to the media processing server along the uplink channel (from the user terminal to the media processing server).
a8. The user terminal exits the session and sends a BYE request.
a9. The media processing server receives the BYE request, responds with a 200 OK message, releases the related session resources, and generates a related charging bill.

### II. Recording interaction process

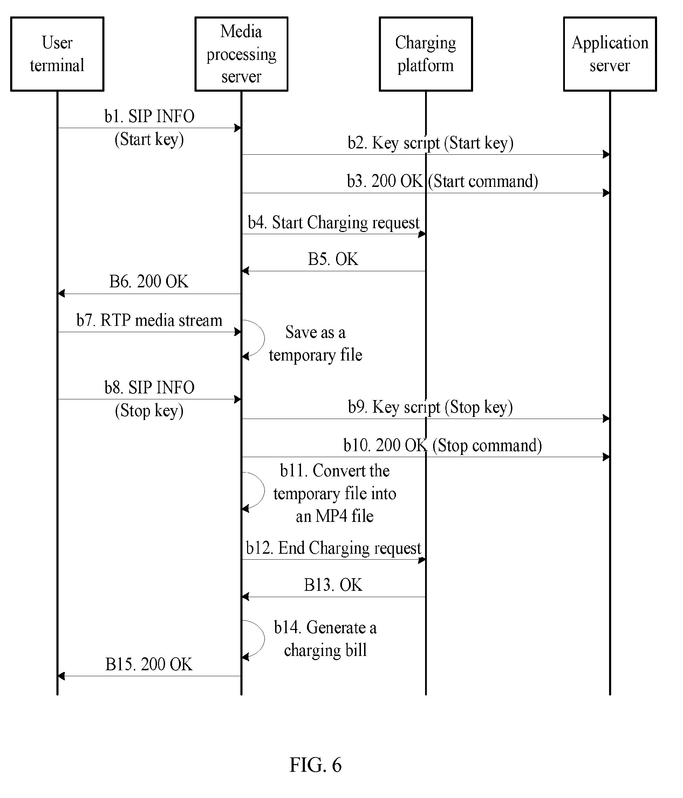

After the above session setup process, a bidirectional media transport channel between the user terminal and the server is set up and the video recording process can then be started. In the recording process, the user can complete control operations including Start, Stop, Playback, Save and Remove. The following takes Start and Stop as examples to describe the recoding interaction process. Other operations are similar. As shown in FIG. 6, the process includes:
b 1. After the user terminal obtains the recording navigation menu, the user presses the Start key according to the navigation menu to send a SIP INFO command to the media processing server. The INFO command carries Start key script information.
b2. The media processing server forwards the received key script information to the application server.
b3. The application server resolves the script command and responds with a 200 OK message which carries a Start command to the media processing server.
b4. Upon reception of the Start command from the application server, the media processing server sends a Start Charging request to the charging platform.
b5. The media processing server receives an OK message from the charging platform.
b6. The media processing server sends a 200 OK message to the user terminal.
b7. The media processing server receives an RTP media stream from the user terminal, sorts the received video packets and audio packets by time stamp and saves the packets to a temporary file.
b8. The user presses the Stop key to encapsulate the keystroke into a SIP INFO message, and sends the message to the media processing server.
b9. The media processing server sends the Stop keystroke message to the application server.
b10. The application server responds with a 200 OK message which carries a Stop command.
b11. The media processing server converts the temporary file into an MP4 file.
b12. The media processing server sends an End Charging request to the charging platform.
b13. The media processing server receives an OK message from the charging platform.

If the recording fails, for example, if the conversion of the temporary file into an MP4 file fails, steps b12 and b13 may be replaced as follows: the media processing server sends a Cancel Charging message to the charging platform and receives an OK message.
b14. The media processing server generates a charging bill.
b15. The media processing server sends a 200 OK message to the user terminal.

The device and system under the present invention is detailed below.

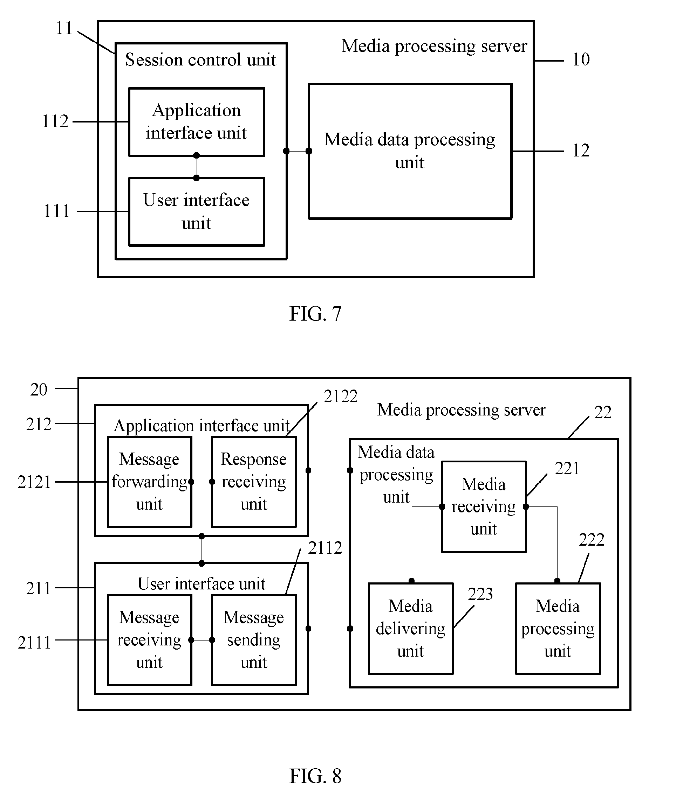

According to the third embodiment of the present invention, a media processing server 10, as shown in FIG. 7, includes:
a session control unit 11, adapted to: set up a session control channel with a user terminal, receive media control information from the user terminal via the session control channel, and obtain a recording operation instruction from the media control information; and
a media data processing unit 12, adapted to: set up a media transport channel with the user terminal, receive media data collected and transmitted in real time by the user terminal via the media transport channel, and execute a recording operation on the media data according to the recording operation instruction obtained by the session control unit 11.

If the media processing server works with an application server, the session control unit 11 further includes:
a user interface unit 111, adapted to: set up the session control channel with the user terminal, negotiate media communication parameters, and receive the media control information from the user terminal; and
an application interface unit 112, adapted to: forward the media control information received by the user interface unit 111 from the user terminal to the application server, and receive a recording command returned from the application server, where the recording command is obtained by the application server by resolving the media control information.

In this case, the media data processing unit 12 sets up the media transport channel with the user terminal according to media communication parameters negotiated by the user interface unit 111, and executes the appropriate recording operation on the media data according to the recording command obtained by the application interface unit 112 from the application server.

The media processing server in this embodiment of the present invention can implement the video/audio program network recording method in the first embodiment.

According to the fourth embodiment of the present invention, a media processing server 20, as shown in FIG. 8, includes: a session control unit 21 and a media data processing unit 22, where the session control unit 21 includes a user interface unit 211 and an application interface unit 212.

The user interface unit 211 includes:
a message receiving unit 2111, adapted to: receive a session setup request from a user terminal, where the session setup request carries media communication parameters of the user terminal, and receive media control information from the user terminal; and
a message sending unit 2112, adapted to send a session setup success message to the user terminal in response to the session setup request received by the message receiving unit 2111 after determining that the server has enough resource capabilities, where the session setup success message carries media communication parameters of the server.

The application interface unit 212 includes:
a message forwarding unit 2121, adapted to forward the session setup request and media control information received by the message receiving unit 2111 from the user terminal to the application server; and
a response receiving unit 2122, adapted to receive the response from the application server in response to the session setup request and media control information forwarded by the message receiving unit 2111, where the response to the session setup request carries a recording navigation menu or a storage address of the recording navigation menu which includes instructions of keys mapped to the media control information, and the response to the media control information includes a recording command.

The media data processing unit 22 includes:
a media receiving unit 221, adapted to: set up a media transport channel with the user terminal according to the media communication parameters obtained by the message receiving unit 2111 from the user terminal and receive media data collected and transmitted in real time by the user terminal via the media transport channel;
a media processing unit 222, adapted to execute an appropriate recording operation on the media data received by the media receiving unit 221 according to the recording command obtained by the response receiving unit 2122; and
a media delivering unit 223, adapted to deliver the recording navigation menu obtained by the response receiving unit 2122 to the user terminal via the media transport channel set up by the media receiving unit 221.

The media processing server in this embodiment of the present invention can implement the video/audio program network recording method in the second embodiment.

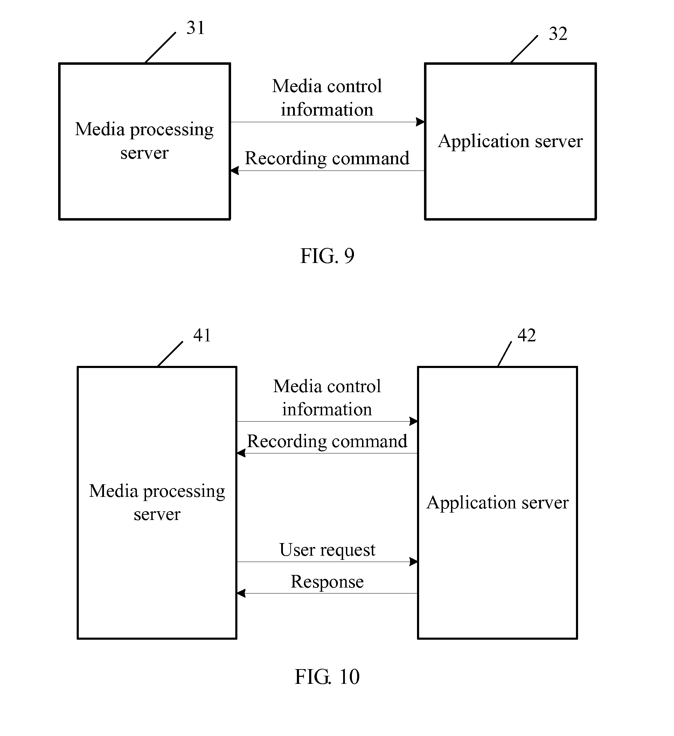

In the fifth embodiment of the present invention, a network recording system, as shown in FIG. 9, includes a media processing server 31 and an application server 32.

The media processing server 31 is adapted to: set up a session control channel and a media transport channel with a user terminal, receive media control information from the user terminal and forward the media control information to the application server 32, receive a recording command returned by the application server 32, and execute an appropriate recording operation on the media data according to recording command.

The application server 32 is adapted to: receive the media control information from the media processing server 31, resolve the media control information to obtain a recording command, and return the recording command to the media processing server 31.

The media processing server in this embodiment may use the structure described in the third embodiment.

In the sixth embodiment of the present invention, a network recording system, as shown in FIG. 10, includes a media processing server 41 and an application server 42.

The media processing server 41 is adapted to: receive a session setup request from a user terminal and forward the request to the application server 42, where the session setup request carries media communication parameters of the user terminal; receive a response to the session setup request from the application server 42, where the response carries a recording navigation menu or a storage address of the recording navigation menu which includes instructions of keys mapped to the media control information; return a session setup success message to the user terminal in response to the session setup request after determining that the server end has enough resource capabilities, where the session setup success message carries media communication parameters of the server; set up a media transport channel with the user terminal according to the media communication parameters of the user terminal; deliver the recording navigation menu to the user terminal and receive media data collected and transmitted in real time by the user terminal via the media transport channel; receive media control information from the user terminal and forward the media control information to the application server 42; receive a recording command returned by the application server 42; and execute an appropriate recording operation on the media data according to the recording command.

The application server 42 is adapted to: receive the session setup request of the user forwarded by the media processing server 41 and return a response to the session setup request; receive the media control information forwarded by the media processing server 41; resolve the media control information to obtain a recording command; and deliver the recording command to the media processing server 41.

The media processing server in this embodiment may use the structure described in the fourth embodiment.

In practice, the media processing server in the third to sixth embodiments may either be a standalone hardware device or be deployed in a media server as a function to implement the functions described in the above embodiments.

To sum up, in the embodiments of the present invention, a session control channel and a media transport channel are set up between a user terminal and a server so as to receive media data collected by the user terminal in real time and to control recording of the media data. Because media data is uploaded in real time, a large storage space is no longer required in the user terminal so that the method is also applicable to such terminals as handsets and set top boxes that have small storage spaces. Moreover, because both a control channel and a data channel are set up, the user terminal is able to control recording operations of the server via the control channel so that the user obtains an experience similar to processing a local media file. Further, if a SIP-based session setup process is adopted, QoS policy management can be implemented if supported by network devices, so that an end-to-end communication channel with guaranteed bandwidth is set up to assure the QoS of real-time transport of the recorded program stream. In addition, because the recording navigation menu is delivered over a media stream, lower capabilities are required on the terminal. Compared with a browser-based solution, a terminal only needs to have the video communication capability, without the capability of intelligent browser resolution. For example, a common video phone and a camera-enabled 3G handset can serve the purpose well. Furthermore, because the recording navigation menu is displayed dynamically in a media stream, the display effect is better and the user experience is enhanced.

Detailed above are a video/audio program network recording method, a media processing server, and a network recording system under the present invention. Although the invention is described through several exemplary embodiments, the invention is not limited to such embodiments. It is apparent that those skilled in the art can make various modifications and variations to the invention without departing from the spirit and scope of the present invention. The invention shall cover the modifications and variations provided that they fall in the scope of protection defined by the following claims or their equivalents.

## Claims

1. A program network recording method, comprising:
setting up a session control channel and a media transport channel with a user terminal;
receiving media control information from the user terminal via the session control channel;
receiving media data collected and transmitted in real time by the user terminal via the media transport channel; and
executing a recording operation on the media data according to the media control information.

2. The method of claim 1, wherein setting up a session control channel and a media transport channel with the user terminal comprises:
setting up a session control channel with the user terminal and negotiating media communication parameters; and
setting up a media transport channel with the user terminal according to the negotiated media communication parameters.

3. The method of claim 2, wherein setting up a session control channel with the user terminal and negotiating media communication parameters comprises:
receiving a session setup request from the user terminal, wherein the session setup request carries media communication parameters of the user terminal;
returning a session setup success message to the user terminal when determining that server has enough resource capabilities, wherein the session setup success message carries media communication parameters of the server.

4. The method of claim 3, further comprising:
obtaining a recording navigation menu or a storage address of the recording navigation menu, wherein the recording navigation menu includes instructions of keys mapped to the media control information; and
delivering the recording navigation menu to the user terminal via the media transport channel.

5. The method of claim 4, wherein obtaining a recording navigation menu or a storage address of the recording navigation menu comprises:
forwarding the session setup request to an application server;
receiving a response that carries the recording navigation menu or the storage address of the recording navigation menu returned by the application server.

6. The method of any one of claims 1-5, wherein executing a recording operation on the media data according to the media control information comprises:
sending the media control information sent from the user terminal to an application server;
receiving a recording command returned from the application server, wherein the recording command is obtained by the application server by resolving the media control information; and
executing the recording operation on the media data sent from the user terminal according to the recording command obtained.

7. The method of any one of claims 1-5, wherein the media control information comprises at least one of:
start control information, wherein the associated recording operation is to save the received media data in a temporary storage area;
stop control information, wherein the associated recording operation is to stop saving received media data in a temporary storage area;
playback control information, wherein the associated recording operation is to read the saved media data and deliver the media data to the user terminal via the media transport channel;
save control information, wherein the associated recording operation is to move the media data saved in a temporary storage area to a permanent storage area; and
remove control information, wherein the associated recording operation is to delete the media data saved in a temporary storage area from the temporary storage area.

8. The method of any one of claims 1-5, wherein if the user terminal is located in a circuit switched domain, the session control channel and the media transport channel with the user terminal located in the circuit switched domain are set up via a Video Interworking Gateway, VIG, which converts the control information and media data sent from the user terminal located in the circuit switched domain to a specific format of an IP domain, and forwards the specific format of the IP domain.

9. The method of any one of claims 1-5, further comprising:
triggering a resource control device in a network to reserve resources for the media transport channel of the session.

10. The method of claim 9, wherein reserving resources for the media transport channel of the session comprises:
delivering a Token to the user terminal;
receiving a resource request carrying the Token from the user terminal; and
determining information of the Token, obtaining QoS parameters according to the resource request, and executing resource allocation policy according to the QoS parameters.

11. The method of claim 9, wherein the resource control devices comprises a Policy Decision Function, PDF, entity and a Policy Enforcement Function, PEF, entity, and the resource control device reserving resources for the media transport channel of the session comprises:
registering the session with the PDF by a Call Session Control Function, CSCF, participating in the setup of the session control channel in the network, obtaining a Token from the PDF entity and delivering the Token to the user terminal;
receiving, by the PEF entity, a resource request carrying the Token from the user terminal, sending the resource request to the PDF entity;
determining, by the PDF entity, information of the Token, delivering QoS parameters to the PEF entity according to the resource request; and
executing, by the PEF entity, resource allocation policy according to the returned QoS parameters.

12. The method of any one of claims 1-5, wherein Real-time Transport Protocol, RTP, is adopted to transport the media data in the media transport channel.

13. A media processing server, comprising:
a session control unit (11), adapted to set up a session control channel with a user terminal, receive media control information from the user terminal via the session control channel, and obtain a recording operation instruction from the media control information; and
a media data processing unit (12), adapted to set up a media transport channel with the user terminal, receive media data sent by the user terminal via the media transport channel, and execute a recording operation on the media data according to the recording operation instruction.

14. The media processing server of claim 13, wherein the session control unit 11 comprises:
a user interface unit (111), adapted to set up the session control channel with the user terminal, negotiate media communication parameters, and receive the media control information from the user terminal; and
an application interface unit (112), adapted to forward the media control information from the user terminal to an application server, and receive a recording command returned from the application server, wherein the recording command is obtained by the application server by resolving the media control information;
wherein the media data processing unit 12 sets up the media transport channel with the user terminal according to the negotiated media communication parameters, and executes the recording operation on the media data according to the recording command.

15. The media processing server of claim 14, wherein:
the user interface unit 111 comprises:
a message receiving unit 2111, adapted to receive a session setup request from the user terminal, wherein the session setup request carries media communication parameters of the user terminal, and receive media control information from the user terminal; and
a message sending unit 2112, adapted to send a session setup success message to the user terminal in response to the session setup request after determining that server has enough resource capabilities, wherein the session setup success message carries media communication parameters of the server;
the application interface unit comprises:
a message forwarding unit 2121, adapted to forward the session setup request and media control information from the user terminal to the application server; and
a response receiving unit 2122, adapted to receive response from the application server in response to the session setup request and media control information; wherein the response to the session setup request carries a recording navigation menu or a storage address of the recording navigation menu which includes instructions of keys mapped to the media control information, and the response to the media control information includes a recording command;
the media data processing unit comprises:
a media receiving unit 221, adapted to set up the media transport channel with the user terminal according to the media communication parameters from the user terminal and receive media data sent by the user terminal via the media transport channel;
a media processing unit 222, adapted to execute the recording operation on the media data according to the recording command; and
a media delivering unit 223, adapted to deliver the recording navigation menu to the user terminal via the media transport channel.

16. A network recording system, comprising: a media processing server (31) and an application server (32); wherein:
the media processing server (31) is adapted to set up a session control channel and a media transport channel with a user terminal, receive media control information from the user terminal and forward the media control information to an application server (32), receive a recording command returned by the application server (32), and execute a recording operation on the media data according to recording command; and
the application server (32) is adapted to receive the media control information from the media processing server (31), resolve the media control information to obtain the recording command, and return the recording command to the media processing server (31).

17. A network recording system, comprising: a media processing server 41, adapted to receive a session setup request from a user terminal, wherein the session setup request carries media communication parameters of the user terminal; return a session setup success message to the user terminal in response to the session setup request after determining that server has enough resource capabilities according to the obtained media communication parameters; set up a media transport channel with the user terminal according to the media communication parameters of the user terminal; receive media data and media control information from the user terminal; and execute a recording operation on the media data according to the media control information.

18. The network recording system of claim 17, wherein the network recording system further comprises an application server 42; wherein:
the media processing server 41 is adapted to forward the session setup request to the
application server 42; receive a response to the session setup request from the application server 42, wherein the response carries a recording navigation menu or a storage address of the recording navigation menu which includes instructions of keys mapped to the media control information; deliver the recording navigation menu to the user terminal via the media transport channel; forward the media control information to the application server 42; receive a recording command returned by the application server 42; and execute the recording operation on the media data according to the recording command;
the application server 42 is adapted to receive the session setup request of the user terminal forwarded by the media processing server 41 and return the response to the session setup request; receive the media control information forwarded by the media processing server 41; resolve the media control information to obtain the recording command; and deliver the recording command to the media processing server 41.
